(19) Europäisches Patentamt
European Patent Office
Office européen des brevets

(11) EP 2 294 111 B1

(12) **FASCICULE DE BREVET EUROPEEN**

(45) Date de publication et mention de la délivrance du brevet:
**25.07.2018 Bulletin 2018/30**

(21) Numéro de dépôt: **09766093.0**

(22) Date de dépôt: **19.06.2009**

(51) Int Cl.:
***C08G 69/26*** (2006.01) ***C08G 69/28*** (2006.01)
***C08G 69/36*** (2006.01) ***C08L 77/06*** (2006.01)
***B32B 27/34*** (2006.01) ***G02C 5/00*** (2006.01)
***G02C 7/02*** (2006.01) ***C08J 5/18*** (2006.01)
***G01J 3/02*** (2006.01) ***G01J 3/433*** (2006.01)
*C08L 77/12* (2006.01)

(86) Numéro de dépôt international:
**PCT/FR2009/051176**

(87) Numéro de publication internationale:
**WO 2009/153531 (23.12.2009 Gazette 2009/52)**

(54) **POLYAMIDE, COMPOSITION COMPRENANT UN TEL POLYAMIDE ET LEURS UTILISATIONS**

POLYAMID, EIN DERARTIGES POLYAMID UMFASSENDE ZUSAMMENSETZUNG UND VERWENDUNGEN DAVON

POLYAMIDE, COMPOSITION COMPRISING SUCH A POLYAMIDE, AND USES THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.06.2008 FR 0854100**

(43) Date de publication de la demande:
**16.03.2011 Bulletin 2011/11**

(73) Titulaire: **Arkema France**
**92700 Colombes (FR)**

(72) Inventeurs:
- **LÊ, Guillaume**
  **F-14460 Colombelles (FR)**
- **JOUANNEAU, Julien**
  **F-27500 Pont-audemer (FR)**
- **SAILLARD, Benjamin**
  **F-27300 Bernay (FR)**

(74) Mandataire: **Dossmann, Gérard**
**Casalonga & Partners**
**Bayerstrasse 71-73**
**80335 München (DE)**

(56) Documents cités:
**EP-A- 0 725 101**
**EP-A- 1 595 907**
**EP-A1- 2 113 535**
**WO-A-91/06660**
**US-A- 5 434 307**
**US-A- 6 004 784**
**US-A1- 2005 272 908**
**US-A1- 2007 270 544**

- **KIM KI-SOO ET AL: "Copolyamides derived from brassylic acid" JOURNAL OF APPLIED POLYMER SCIENCE, JOHN WILEY AND SONS INC. NEW YORK, US, vol. 23, 1 janvier 1979 (1979-01-01), pages 439-444, XP002451227 ISSN: 0021-8995**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 2 294 111 B1

## Description

La présente invention se rapporte à un procédé de préparation d'un polyamide

On connaît à ce jour des polyamides amorphes transparents obtenus par polycondensation de diamines et de diacides. De tels polyamides sont particulièrement intéressants, car ils présentent de nombreuses propriétés mécaniques telles qu'une résistance aux chocs, à la traction et/ou la compression, une tenue élevée aux agressions extérieures (comme la chaleur, les agents chimiques, les rayonnements UV,...), en plus de la transparence.

Aussi a-t-on vu apparaître des objets à base de polyamides, tels que par exemple des montures de lunettes, boîtiers divers, équipements pour automobile, matériel chirurgical, emballage, articles de sport.

Des polyamides amorphes transparents convenant pour la fabrication de ce type d'objets ont notamment été décrits dans les documents EP 1 595 907 et US 2005/0272908 au nom du Demandeur. Ces polyamides sont obtenus par polycondensation d'au moins une diamine cycloaliphatique et d'au moins 50% en mole d'acide tetradécanedioïque, le ou les autres diacides carboxyliques complémentaires pouvant être choisis parmi les diacides carboxyliques aliphatiques, aromatiques et cycloaliphatiques.

Ces polyamides présentent non seulement l'ensemble des propriétés énoncées ci-dessus, mais également une température de transition vitreuse Tg relativement élevée, typiquement de l'ordre de 130°C à 160°C environ.

Le document EP 0 725 101 porte sur des polyamides incolores, transparents et amorphes dérivés de diamines cycloaliphatiques substituées en C14-C22 et de diacides aliphatiques non substitutés en C8-C14 ou de diamines aliphatiques en C8-C14 non substituées et de diacides cycloaliphatiques non substitués en C7-C36.

Le document US2007/0270544 porte sur une composition de moulage à base de polyamides transparents, amorphes, comprenant des polyamides obtenus par polycondensation de diacides aliphatiques en C17-C21 avec une diamine de structure bis(3-méthyl-4-aminocyclohexyl)méthane (MACM) et des additifs réticulants ou des colorants.

Le document EP 2 113 535 relève de l'état de la technique selon l'article 54(3) CBE. Ce document porte sur une composition de moulage à base de polyamides transparents, amorphes, comprenant (A) 40 à 100% d'au moins un copolyamide transparent de Tg comprise entre 80 et 150°C, obtenu à partir d'une diamine aliphatique et d'une diamine cycloaliphatique en C6-C36, et d'un ou plusieurs diacides aliphatiques en C6-C36, (B) 0 à 60% d'au moins un autre polymère et (C) 0 à 10% d'au moins un additif.

Cependant, les préoccupations environnementales des dernières années militent en faveur de la mise au point de matériaux, qui répondent le plus possible aux préoccupations de développement durable, en limitant notamment les approvisionnements en matières premières issues de l'industrie pétrolière pour leur fabrication.

Le but de la présente invention est donc de proposer un polyamide possédant au moins certaines des propriétés mécaniques énoncées ci-dessus tout en comportant dans leur structure des motifs issus de matière première renouvelable.

D'autres caractéristiques, aspects, objets et avantages de la présente invention apparaîtront encore plus clairement à la lecture de la description et des exemples qui suivent.

De manière générale, les polyamides comprennent au moins deux motifs répétitifs identiques ou distincts, ces motifs étant formés à partir des deux monomères, ou comonomères, correspondants. Les polyamides sont donc préparés à partir de deux ou plusieurs monomères, ou comonomères, choisis parmi un aminoacide, un lactame et/ou un diacide carboxylique et une diamine.

Le but de la présente invention est atteint par un procédé de préparation d'un polyamide comprenant au moins un motif répétitif répondant à la formulation générale suivante :

$$X.Y$$

dans laquelle

X représente une diamine cycloaliphatique et
Y représente un diacide carboxylique aliphatique choisi parmi l'acide dodécanedioïque (en C12), l'acide tetradécanedioïque (en C14), l'acide hexadécanedioïque (en C16),

caractérisé en ce que ledit diacide carboxylique aliphatique comporte du carbone organique d'origine renouvelable, également appelé bioressourcé déterminé selon la norme ASTM D6866,
comprenant les étapes suivantes :

a) obtention d'un monoacide gras à partir d'une matière première renouvelable, éventuellement purification,

b) préparation d'un diacide à partir du monoacide gras issu de l'étape précédente.

c) polycondensation d'au moins un diacide gras, comportant du carbone d'origine renouvelable déterminé selon la norme ASTM D6866 sur une diamine cycloaliphatique.

Ainsi, le polyamide obtenu par le procédé selon l'invention peut être un homopolyamide, lorsqu'il ne comporte que des motifs X.Y identiques. Le polyamide selon l'invention peut également être un copolyamide, lorsqu'il comporte au moins deux motifs X.Y distincts. Généralement, les copolyamides sont notés X.Y/Z, permettant de distinguer les différents comonomères. De préférence, le polyamide obtenu par le procédé selon l'invention est un homopolyamide.

Une matière première renouvelable est une ressource naturelle, animale ou végétale, dont le stock peut se reconstituer sur une période courte à l'échelle humaine. Il faut en particulier que ce stock puisse se renouveler aussi vite qu'il est consommé.

D'une manière générale, les polyamides sont des polymères dont la durabilité est l'une de leurs qualités essentielles. Les polyamides sont généralement utilisés dans des applications, pour lesquelles les durées de vie attendues sont au moins de l'ordre de la décennie. Lorsque des matières premières d'origine renouvelable, telles que l'huile végétale comme l'huile de ricin ou l'huile de palme par exemple, sont utilisées pour la fabrication de ces polyamides, il est possible de considérer qu'une certaine quantité de CO2 initialement prélevée dans l'atmosphère au cours de la photosynthèse, dans le cas des végétaux, est fixée durablement dans le matériau, le soustrayant ainsi du cycle du carbone pendant au moins toute la durée de vie du produit polyamide.

Au contraire, les polyamides d'origine fossile ne capturent pas lors de leur durée de vie, de CO2 atmosphérique (capté lors de la photosynthèse par exemple). Ils libèrent potentiellement en fin de vie (exemple lors de l'incinération) une quantité de CO2 fossile de l'ordre de 2.5 tonnes par tonne de polyamide, qui avait été capté précédemment dans la ressource fossile.

Lorsque des matières premières fossiles sont utilisées pour fabriquer ces polyamides, on contribue ainsi en fin de vie du matériau, à réinjecter dans le cycle du carbone, du carbone qui en était sorti, puisque fossilisé et ce sur une échelle de temps de l'ordre de plusieurs millions d'années. En d'autres termes, ce carbone vient en supplément dans le cycle, entraînant un déséquilibre. Ces phénomènes contribuent alors à l'effet d'accumulation et donc à l'accroissement de l'effet de serre.

Pour les polyamides obtenus par le procédé de l'invention, l'utilisation de matières premières d'origine renouvelable au lieu de matières premières d'origine fossile contribue à diminuer d'au moins 44% les quantités de CO2 fossile potentiellement émises en fin de vie, CO2 provenant de leur structure carbonée.

A la différence des matériaux issus de matières fossiles, les matières premières renouvelables ou bioressourcées contiennent du $^{14}C$. Tous les échantillons de carbone tirés d'organismes vivants (animaux ou végétaux) sont en fait un mélange de 3 isotopes : $^{12}C$ (représentant environ 98,892 %), $^{13}C$ (environ 1,108 %) et $^{14}C$ (traces: $1{,}2.10^{-10}$ %). Le rapport $^{14}C/^{12}C$ des tissus vivants est identique à celui de l'atmosphère. Dans l'environnement, le $^{14}C$ existe sous deux formes prépondérantes : sous forme minérale, c'est-à-dire de gaz carbonique ($CO_2$), et sous forme organique, c'est-à-dire de carbone intégré dans des molécules organiques.

Dans un organisme vivant, le rapport $^{14}C/^{12}C$ est maintenu constant par le métabolisme, car le carbone est continuellement échangé avec l'environnement extérieur. La proportion de $^{14}C$ étant constante dans l'atmosphère, il en est de même dans l'organisme, tant qu'il est vivant, puisqu'il absorbe ce $^{14}C$ au même titre que le $^{12}C$ ambiant. Le rapport moyen de $^{14}C/^{12}C$ est égal à $1{,}2x10^{-12}$.

Le $^{12}C$ est stable, c'est-à-dire que le nombre d'atomes de $^{12}C$ dans un échantillon donné est constant au cours du temps. Le $^{14}C$, lui, est radioactif (chaque gramme de carbone d'un être vivant contient suffisamment d'isotopes $^{14}C$ pour donner 13,6 désintégrations par minute) et le nombre de tels atomes dans un échantillon décroît au cours du temps (t) selon la loi :

$$n = no \exp(-at),$$

dans laquelle:

- no est le nombre de $^{14}C$ à l'origine (à la mort de la créature, animal ou plante),
- n est le nombre d'atomes $^{14}C$ restant au bout du temps t,
- a est la constante de désintégration (ou constante radioactive) ; elle est reliée à la demi-vie.

La demi-vie (ou période) est la durée au bout de laquelle un nombre quelconque de noyaux radioactifs ou de particules instables d'une espèce donnée, est réduit de moitié par désintégration ; la demi-vie $T_{1/2}$ est reliée à la constante de désintégration a par la formule $aT_{1/2}= \ln 2$. La demi-vie du $^{14}C$ vaut 5730 ans.

Compte tenu de la demi-vie ($T_{1/2}$) du $^{14}C$, la teneur en $^{14}C$ est sensiblement constante depuis l'extraction des matières premières renouvelables, jusqu'à la fabrication des polyamides obtenus par le procédé selon l'invention et

même jusqu'à la fin de leur utilisation.

Les polyamides obtenus par le procédé selon l'invention comportent du carbone organique (c'est-à-dire du carbone intégré dans des molécules organiques) issu de matières premières d'origine renouvelables, ce qui peut être certifié par détermination de la teneur en $^{14}C$ selon l'une des méthodes décrites dans la norme ASTM D6866-06 (Standard Test Methods for Determining the Biobased Content of Natural Range Materials Using Radiocarbon and Isotope Ratio Mass Spectrometry Analysis).

Cette norme ASTM D6866-06 comporte trois méthodes de mesure de carbone organique issu de matières premières renouvelables, dénommé en langue anglaise biobased carbon. Les proportions indiquées pour les polyamides obtenus par le procédé de l'invention sont de préférence mesurées selon la méthode par spectrométrie de masse ou la méthode par spectrométrie à scintillation liquide décrites dans cette norme.

Par conséquent, la présence de $^{14}C$ dans un matériau, et ce quelle qu'en soit la quantité, donne une indication sur l'origine des molécules le constituant, à savoir qu'une certaine fraction provient de matières premières renouvelables et non plus de matériaux fossiles. Les mesures effectuées par les méthodes décrites dans la norme ASTM D6866-06 permettent ainsi de distinguer les monomères ou les réactifs de départs issus de matières renouvelables des monomères ou réactifs issus de matériaux fossiles. Ces mesures ont un rôle de test.

Ainsi, en utilisant le diacide carboxylique Y obtenu à partir d'une matière première renouvelable, on obtient des polyamides qui présentent des propriétés mécaniques, chimiques et thermiques de l'ordre de celles des polyamides de l'art antérieur obtenus à partir de diacides issus de la pétrochimie, ceci répondant au moins à l'une des préoccupations de développement durable évoquées ci-dessus, à savoir le fait de limiter l'utilisation des ressources fossiles.

Les matières premières d'origine végétale présentent l'avantage d'être constituées de composés possédant essentiellement des nombres pairs d'atome de carbone, contrairement aux monomères issus de coupes pétrolières, qui possèdent, quant à elles, des impuretés comportant à la fois des nombres d'atome de carbone pairs et impairs. Ainsi, les impuretés drainées au cours des procédés de transformation de produits issus de matières premières d'origine végétale possèdent essentiellement un nombre pair d'atomes de carbone. La présence de ces impuretés à nombre impair d'atomes de carbone a un impact direct sur la structure macromoléculaire du polyamide final, conduisant à un effet de désorganisation de la structure. Par conséquent, certaines propriétés du polyamide peuvent s'en trouver affectées, telles que la cristallinité, la température de fusion ou la température de transition vitreuse par exemple.

En d'autres termes, le monomère Y du polyamide est obtenu à partir des diacides en C12, C14 ou C16, eux-mêmes provenant de matières premières renouvelables, que l'on identifie à partir de la norme ASTM D6866. La teneur exprimée en pourcentage de carbone organique renouvelable dans le polyamide selon l'invention, notée $\%C_{org.renouv}$, est strictement supérieure à 0, la teneur $\%C_{org.renouv}$ répondant à l'équation (I) suivante :

$$\%C_{org.renouv} = \frac{\sum_i Fi \times Ci + \sum_k Fk \times Ck'}{\left(\sum_j Fj \times Cj + \sum_i Fi \times Ci + \sum_k Fk \times Ck\right)} \times 100 \qquad \text{(I)}$$

avec i = monomère(s) issu(s) de matières premières 100% renouvelables,
j = monomère(s) issu(s) de matières premières 100% fossiles,
k = monomère(s) issu(s) en partie de matières premières renouvelables,
Fi, Fj, Fk = fraction(s) molaire(s) respective(s) des monomères i, j et k dans le polyamide,
Ci, Cj, Ck = nombre respectif d'atomes de carbone des monomères i, j et k dans le polyamide,
Ck' = nombre d'atomes de carbone organique renouvelable dans le(s) monomère(s) k,
la nature (renouvelable ou fossile), c'est-à-dire la provenance de chacun des monomères i, j et k étant déterminée selon une des méthodes de mesure de la norme ASTM D6866.

Les (co)monomères X et Y sont des monomères i, j et k au sens de l'équation (I).

De préférence, le polyamide contient une teneur $\%C_{org.renouv}$ supérieure ou égale à 20%, avantageusement supérieure ou égale à 40%, de préférence supérieure ou égale à 50%, et plus préférentiellement supérieure ou égale à 52%.

Lorsque le polyamide obtenu par le procédé selon l'invention présente une teneur $\%C_{org\ renouv}$ supérieure ou égale à 50%, il répond aux critères d'obtention de la certification "Biomass Pla" du JBPA, certification qui repose également sur la norme ASTM D6866. Le polyamide obtenu par le procédé selon l'invention peut en outre valablement porter le label "Bio-mass-based" de l'Association JORA.

Par exemple, le ou les (co)monomères peuvent être issus de ressources renouvelables, telles que les huiles végétales ou les polysaccharides naturels tels que l'amidon ou la cellulose, l'amidon pouvant être extrait, par exemple,

du maïs ou de la pomme de terre. Ce ou ces (co)monomères, ou produits de départ, peuvent en particulier provenir de divers procédés de transformation, notamment de procédés chimiques classiques, mais également de procédés de transformation par voie enzymatique ou encore par bio-fermentation.

Le diacide en C12 (acide dodécanedioïque) peut être obtenu par bio-fermentation de l'acide dodécanoïque, également dénommé acide laurique, l'acide laurique pouvant être extrait de l'huile riche formée de palme kernal et de noix de coco, par exemple.

Le diacide en C14 (acide tetradécanedioïque) peut être obtenu par bio-fermentation de l'acide myristique, l'acide myristique pouvant être extrait de l'huile riche formée de palme kernal et de noix de coco, par exemple.

Le diacide en C16 (acide hexadécanedioïque) peut être obtenu par bio-fermentation de l'acide palmitique, ce dernier se trouvant dans l'huile de palme principalement, par exemple.

Par exemple, il est possible d'utiliser la levure *Candida Tropicalis* modifiée afin de réaliser la conversion d'un monoacide gras en diacide (WO 91/06660 ; US 4, 474, 882).

Le monomère X du polyamide obtenu par le procédé selon l'invention représente une diamine cycloaliphatique.

Parmi les diamines cycloaliphatiques, celles comprenant deux cycles sont préférées. Elles répondent notamment à la formule générale suivante :

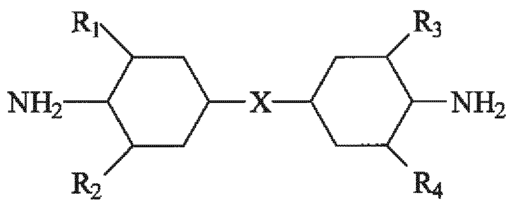

dans laquelle

R1 à R4 représentent des groupements identiques ou différents choisis parmi un atome d'hydrogène ou des groupements alkyles de 1 à 6 atomes de carbone et X représente soit une liaison simple, soit un groupement divalent constitué:

- d'une chaîne aliphatique linéaire ou branchée comprenant de 1 à 10 atomes de carbone,
- d'un groupement cycloaliphatique de 6 à 12 atomes de carbone,
- d'une chaîne aliphatique linéaire ou branchée de 1 à 10 atomes de carbone, substituée par des groupements cycloaliphatiques de 6 à 8 atomes de carbone
- d'un groupement de 8 à 12 atomes de carbone constitué d'un dialkyle, linéaire ou branché, avec un groupement cyclohexyle ou benzyle.

Plus préférentiellement, la diamine cycloaliphatique du copolyamide obtenu par le procédé selon l'invention est choisie parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP).

De manière encore plus préférentielle, et en vue d'obtenir un copolyamide transparent, la diamine cycloaliphatique est choisie parmi la bis-(3-méthyl-4-aminocyclohexyl)-méthane (BMACM ou MACM), notamment celle commercialisée par la société BASF sous la dénomination Laromin® C260, et la p-bis(aminocyclohexyl)-methane (PACM).

La PACM20 comprenant de l'ordre de 20% en masse du stéréoisomère trans/trans, notamment celle commercialisée par la société Air Products sous la dénomination Amicure®, est plus particulièrement préférée.

Le choix de telles diamines cycloaliphatiques (BACM ou PACM20) permet d'obtenir, dans la plupart des cas, un polyamide transparent, la transparence étant caractérisée par une enthalpie de fusion du polyamide d'une valeur comprise entre 0 et 12J/g.

Parmi toutes les combinaisons possibles pour les polyamides X.Y, on retiendra en particulier les polyamides répondant à l'une des formules choisies parmi MACM. 12 ; MACM. 14, PACM.12, PACM.14.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Les proportions molaires en diamine cycloaliphatique et en diacide sont préférentiellement stoechiométriques.

Plus particulièrement, le polyamide est un copolyamide et peut comprendre au moins deux motifs distincts et répondre à la formulation générale suivante :

X.Y/Z

dans laquelle :

X et Y sont tels que définis ci-dessus,

Z étant choisi parmi un motif obtenu à partir d'un aminoacide, un motif obtenu à partir d'un lactame et un motif répondant à la formule (diamine en Ca).(diacide en Cb), avec a représentant le nombre de carbones de la diamine et b représentant le nombre de carbones du diacide, a et b étant chacun compris entre 4 et 36.

Lorsque Z représente un aminoacide, il peut être choisi parmi l'acide 9-aminononanoïque, l'acide 10-aminodécanoïque, l'acide 12-aminododécanoïque et l'acide 11-aminoundécanoïque ainsi que ses dérivés, notamment l'acide N-heptyl-11-aminoundécanoïque.

A la place d'un aminoacide, on pourrait également envisager un mélange de deux, trois,... ou plusieurs aminoacides. Toutefois, les copolyamides formés comprendraient alors trois, quatre,... ou plus, motifs, respectivement.

Parmi les combinaisons envisageables, les copolyamides suivants présentent un intérêt particulièrement marqué : il s'agit des copolyamides répondant à l'une des formules choisies parmi B.12/11, B.12/12, P.12/11, P.12/12, B.14/11, P.14/11, B.14/12, P.14/12, le nombre 11 symbolisant le monomère issu de l'acide 11-aminoundécanoïque, le nombre 12 après le / symbolisant le motif issu du laurolactame, P symbolisant la diamine PACM, B symbolisant la diamine MACM, le nombre 12 suivant le monomère B ou P symbolisant l'acide dodécanedioïque (en C12), le nombre 14 suivant le monomère B ou P symbolisant l'acide tetradécanedioïque (en C14).

Dans une version avantageuse de l'invention, la teneur molaire en Z est comprise entre 2 et 80%, la teneur molaire en diamine cycloaliphatique X étant comprise entre 10 et 49% et la teneur molaire en diacide Y étant également comprise entre 10 et 49%.

Il est précisé que l'expression "compris entre" utilisée dans les paragraphes précédents, mais également dans la suite de la présente description, doit s'entendre comme incluant chacune des bornes mentionnées.

Le choix de telles teneurs molaires permet d'obtenir, dans la plupart des cas, un copolyamide transparent, la transparence étant caractérisée par une enthalpie de fusion du copolyamide d'une valeur comprise entre 0 et 12J/g .

Lorsque Z représente un lactame, il peut être choisi parmi la pyrrolidinone, la piperidinone, le caprolactame, l'énantholactame, le caprylolactame, le pelargolactame, le décanolactame, l'undecanolactame, et le laurolactame.

Lorsque le motif Z est un motif répondant à la formule (diamine en Ca).(diacide en Cb), le motif (diamine en Ca) est de formule $H2N-(CH2)_a-NH2$, lorsque la diamine est aliphatique et linéaire.

Préférentiellement, la diamine en Ca est choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est cycloaliphatique, elle est choisie parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP). Elle peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque la diamine est arylaromatique, elle est choisie parmi la 1,3-xylylène diamine et la 1,4-xylylène diamine et leur mélange.

Lorsque le monomère (diacide en Cb) est aliphatique et linéaire, il est choisi parmi l'acide succinique (y=4), ), l'acide pentanedioïque (y=5), l'acide adipique (y=6), l'acide heptanedioïque (y=7), l'acide octanedioïque (y=8), l'acide azélaïque (y=9), l'acide sébacique (y=10), l'acide undécanedioïque (y=11), l'acide dodécanedioïque (y=12), l'acide brassylique (y=13), l'acide tetradécanedioïque (y=14), l'acide hexadécanedioïque (y=16), l'acide octadécanoïque (y=18), l'acide octadécènoïque (y=18), l'acide eicosanedioïque (y=20), l'acide docosanedioïque (y=22) et les dimères d'acides gras contenant 36 cabones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique, isophtalique et le diacide naphtalènique.

Lorsque, se pose le cas particulier pour lequel les comonomères ou motifs X.Y et lorsque Z est un motif (diamine en Ca).(diacide en Cb) sont strictement identiques (c'est-à-dire a=MACM ou PACM et Cb=C12, C14 ou C16), il s'agit d'un homopolyamide tel que mentionné ci-dessus, qui peut comporter des diacides à la fois, d'origine renouvelable et d'origine fossile.

Parmi toutes les combinaisons possibles pour les copolyamides X.Y/Z dans lesquelles Z est un motif (diamine en Ca).(diacide en Cb), on retiendra en particulier les copolyamides répondant à l'une des formules choisies parmi B.12/10.12, P.12/10.12, B.14/10.14, P.14/10.14, B.12/10.10, P.12/10.10, B.14/10.10, P.14/10.10.

Selon un autre aspect de l'invention, le copolyamide comprend en outre au moins un troisième comonomère et répond à la formulation générale suivante :

$$X.Y/Z/A$$

dans laquelle

A étant choisi parmi un motif obtenu à partir d'un aminoacide, un motif obtenu à partir d'un lactame et un motif répondant à la formule (diamine en Cd).(diacide en Ce), avec d représentant le nombre de carbones de la diamine et e représentant le nombre de carbones du diacide, a et b étant chacun compris entre 4 et 36.

Dans la formule X.Y/Z/A, on se reportera à ce qui a été précédemment décrit pour les (co)monomères ou motifs X.Y d'une part, et Z d'autre part.

Dans cette même formule, le motif A a la même signification le motif Z défini ci-dessus.

Parmi toutes les combinaisons possibles pour les copolyamides X.Y/Z/A selon la dernière variante, on retiendra en particulier les copolyamides répondant à l'une des formules choisies parmi B.12/11/P.12, B.12/12/P.12, B.14/11/P.14, B.14/12/P.14, B.12/11/6.10, B.12/12/6.10, P.12/11/6.10, P.12/12/6.10, B.12/11/10.10, B.12/12/10.10, P.12/11/10.10, P.12/12/10.12, B.12/11/10.12, B.12/12/10.12, P.12/11/10.12, P.12/12/10.12, B.14/11/6.10, B.14/12/6.10, P.14/11/6.10, P.14/12/6.10, B.14/11/10.10, B.14/12/10.10, P.14/11/10.10, P.14/12/10.12, B.14/11/10.12, B.14/12/10.12, P.14/11/10.12, P.14/12/10.12.

Les motifs Z et A peuvent provenir de ressources fossiles ou de ressources renouvelables, augmentant ainsi la proportion de carbone organique dans le polyamide final.

L'invention porte sur un procédé de préparation d'un polyamide tel que défini ci-dessus comprenant au moins une étape de polycondensation d'au moins un diacide, comportant du carbone d'origine renouvelable ou carbone bioressourcé sur une diamine cycloaliphatique.

Le procédé de préparation ci-dessus est complété par deux étapes précédant l'étape de polycondensation précédemment citée :

a) obtention d'un monoacide gras à partir d'une matière première renouvelable, telle que par exemple les huiles végétales ou animales; éventuellement purification,

b) préparation d'un diacide à partir du monoacide gras issu de l'étape précédente, comme par exemple par fermentation ;

ledit diacide étant ensuite polycondensé sur une diamine cycloaliphatique.

Si, à l'exception de l'acide N-heptyl-11-aminoundécanoïque, les dimères d'acides gras et les diamines cycloaliphatiques, les comonomères ou produits de départ envisagés dans la présente description (aminoacides, diamines, diacides) sont effectivement linéaires, rien n'interdit d'envisager qu'ils puissent en tout ou partie être ramifiés, tel que le 2-méthyl-1,5-diaminopentane, partiellement insaturés.

On notera en particulier que le diacide carboxylique en C18 peut être l'acide octadécanedioïque, qui est saturé, ou bien l'acide octadécènedioïque, qui présente quant à lui une insaturation.

La présente invention va être maintenant décrite dans les exemples ci-dessous, de tels exemples étant donnés à but uniquement illustratif, et bien évidemment non limitatif.

EXEMPLES

<u>1/Préparation de différents polyamides (essais A à H)</u>

Les monomères utilisés dans les essais A à H sont les suivants :

- l'acide 11-aminoundécanoïque (noté A11 dans le Tableau 1) fourni par la Société ARKEMA, CAS 2432-99-7,
- la bis-(3-méthyl-4-aminocyclohexyl)-méthane (notée MACM dans le Tableau 1) commercialisée sous la dénomination Laromin® C260 par la Société BASF, CAS 6864-37-5,
- la p-bis(aminocyclohexyl)-méthane (notée PACM20 dans le Tableau 1), comprenant 21% massique d'isomères trans/trans, commercialisée sous la dénomination Amicure® par la Société AIR PRODUCTS, CAS 1761-71-3,
- l'acide dodécanedioïque (noté DC12 dans le Tableau 1) obtenu à partir de l'acide laurique,
- l'acide l'acide tetradécanedioïque (noté DC14 dans le Tableau 1) obtenu à partir de l'acide myristique,
- le lactame 12 (noté L12 dans le tableau 1) commercialisé par la société Arkema, CAS 947-04-6,

Différents homopolyamides et copolyamides ont été préparés à partir de 2 ou 3 monomères en mélange avec plusieurs additifs selon les compositions particulières (Exemples A à H) données dans le Tableau 1.

Le procédé de préparation, transposable pour l'ensemble des Exemples A à H, va maintenant être décrit de manière détaillée pour l'Exemple A.

Il est précisé que les quantités teneurs pondérales en additifs indiquées ci-dessous sont applicables pour l'ensemble des Exemples A à H.

La composition de l'Exemple A comprend les monomères et additifs (acide benzoïque, acide hypophosphoreux, Irganox® 1098, qui est un anti-oxydant commercialisé par la Société CIBA, eau déminéralisée) suivants, dans les teneurs pondérales suivantes :

- 13,98 kg d'acide dodécanedioïque (60,82 mol)
- 14,58 kg de MACM (61,16 mol)
- 72,17 g d'acide benzoïque (0,59 mol)
- 35 g d'Irganox® 1098
- 8,75 g d'acide hypophosphoreux (H3PO2)
- 525 g d'eau distillée

Cette composition est introduite dans un réacteur autoclave de 92 1 qui, une fois fermé, est chauffé sous agitation à 260°C. Après une phase de maintien sous pression autogène pendant 2 heures, la pression est alors diminuée en 1,5h jusqu'à la pression atmosphérique. Le réacteur est alors dégazé pendant environ 1h à 280 °C par un balayage d'azote.

L'homopolyamide obtenu est alors extrudé sous forme de joncs, refroidi dans un bac à eau à température ambiante, puis granulé.

Les granulés obtenus sont ensuite séchés à 80 °C pendant 12h sous vide, pour atteindre une teneur en humidité inférieure à 0,1 %.

Les homopolyamides et copolyamides des Exemples A à H sont conformes à l'invention, dans le sens où la teneur %Corg.renouv est bien strictement supérieure à 0.

En outre, les copolyamides des Exemples A à H sont en plus transparents.

Par ailleurs, ont été explicitement décrits des copolyamides comprenant 2 ou trois motifs distincts. Rien n'interdit toutefois d'envisager des copolyamides comprenant plus de trois motifs distincts, par exemple quatre ou cinq motifs distincts, chacun de ces motifs multiples étant obtenu soit à partir d'un aminoacide, soit à partir d'un lactame, soit répondent à la formule (diamine).(diacide), sous réserve que le polyamide comporte du carbone organique d'origine renouvelable déterminé selon la norme ASTM D6866, autrement dit la teneur $\%C_{org.renouv}$ déterminée par l'équation (I) énoncée ci-dessus soit strictement supérieure à 0.

Tableau 1

| Exemples | MACM % mol | PACM % mol | DC 12 % mol | DC 14 % mol | A 11 % mol | L 12 % mol | %(w) C renouvelable (ASTM D6866) |
|---|---|---|---|---|---|---|---|
| A | 50 | 0 | 50 | 0 | 0 | 0 | 44,4 |
| B | 0 | 50 | 50 | 0 | 0 | 0 | 48,0 |
| C | 50 | 0 | 0 | 50 | 0 | 0 | 48,3 |
| D | 0 | 50 | 0 | 50 | 0 | 0 | 51,9 |
| E | 30 | 0 | 30 | 0 | 0 | 40 | 27,9 |
| F | 0 | 30 | 30 | 0 | 0 | 40 | 29,3 |
| G | 30 | 0 | 30 | 0 | 40 | 0 | 64,0 |

(suite)

| Exemples | MACM % mol | PACM % mol | DC 12 % mol | DC 14 % mol | A 11 % mol | L 12 % mol | %(w) C renouvelable (ASTM D6866) |
|---|---|---|---|---|---|---|---|
| H | 0 | 30 | 30 | 0 | 40 | 0 | 67,2 |

2/ Comparaison des proportions d'impuretés présentes dans des échantillons de diacides d'origine fossile et végétale

Des échantillons de diacides suivants ont été analysés :

- un diacide dodécanedioïque préparé selon le procédé suivant :
  L'acide laurique peut être extrait de l'huile de noix de coco ou bien de l'huile d palme-kernel. Un diacide dodécanedioïque peut ensuite être obtenu par bio-fermentation, en utilisant le micro-organisme approprié, à partir de l'acide laurique. Le diacide peut ensuite subir une amination en présence d'ammoniac et d'au moins une base forte, sans solvant.
- un diacide dodécanedioïque d'origine fossile,
- un diacide tétradécanedioïque préparé selon le procédé suivant :
  L'acide myristique peut être extrait de l'huile de noix de coco ou bien de l'huile d palme-kernel. Un diacide tétradécanedioïque peut ensuite être obtenu par bio-fermentation, en utilisant le micro-organisme approprié, à partir de l'acide myristique. Le diacide peut ensuite subir une amination en présence d'ammoniac et d'au moins une base forte, sans solvant.
- un diacide tétradécanedioïque d'origine fossile.

Tous ces produits ont au préalable été dérivés par silylation dans un mélange acétonitrile, triméthyl amine et Bis (trimethylsilyl)trifluoroacetamide.

Des échantillons de chacun des produits obtenus sont analysés de manière semi-quantitative par chromatographie en phase gaz couplée spectrométrie de masse. Le standard interne utilisé est le Tinuvin 770, et la colonne est du type CP-SIL 5CB (Varian) avec une longueur de 50m.

Cette analyse permet d'identifier un certain nombre d'impuretés de type diacide aliphatique, certaines contenant un nombre d'atomes de carbone pair et d'autres impair, et de comparer de façon semi-quantitative leur teneur réciproque.

Ainsi, pour chacun des échantillons analysé, le rapport R suivant a été calculé :

$$R = \frac{\text{quantité d'impureté contenant un nombre impair d'atomes de carbone}}{\text{quantité d'impureté contenant un nombre pair d'atomes de carbone}}$$

Les résultats figurent dans le tableau ci-dessous :

Tableau 2

| | Origine | R |
|---|---|---|
| diacide dodécanedioïque | fossile | 0.650 |
| | végétale | 0.115 |
| diacide tétradécanedioïque | fossile | 0.175 |
| | végétale | 0.098 |

Ces analyses montrent que la proportion d'impuretés contenant un nombre impair d'atomes de carbone est bien inférieure dans le cas de produits d'origine végétale, ce qui contribue à moins perturber la structure macromoléculaire des polyamides préparés à partir de ces produits.

3/Evaluation du CO2 atmosphérique sorti du cycle du carbone

Le tableau ci-dessous reprend les quantités de CO2 atmosphérique « sortis » du cycle du carbone, lorsqu'une tonne des polyamides de l'invention est produite.

Tableau 3

| | B.12 | B.14 | B.16 |
|---|---|---|---|
| Equivalent CO2 atmosphérique stocké / tonne de PA | 1.22 tonnes | 1.34 tonnes | 1.44 tonnes |

4/Evaluation de la masse de CO2 potentiellement libéré en fin de vie

La mesure est effectuée sur du B.12 de formule brute de l'unité de répétition : C27H48N2O2, la masse molaire de l'unité de répétition étant de 432g/mol avec une masse de carbone C : 324g/mol, soit un pourcentage de % C totale = 75%.

Tableau 4

| | B.12<br>issu à 100% de ressources fossiles | B.12<br>partiellement bioressourcé |
|---|---|---|
| % C renouvelable / l'ensemble des C constituants le PA | 0 | 44 |
| masse de CO2 (t) non neutre provenant du squelette par tonne de PA potentiellement libéré en fin de vie (incinération) | 2.75 | 1.53 |
| % de diminution de CO2 fossile libéré lors de l'incinération | 0 | 44 |

## Revendications

1. Procédé de préparation d'un polyamide comprenant au moins un motif répétitif répondant à la formulation générale suivante :

$$X.Y$$

dans laquelle :

X représente une diamine cycloaliphatique et
Y représente un diacide carboxylique aliphatique choisi parmi l'acide dodécanedioïque (en C12), l'acide tetradécanedioïque (en C14) et l'acide hexadécanedioïque (en C16),

**caractérisé en ce que** ledit diacide carboxylique comporte du carbone organique d'origine renouvelable déterminé selon la norme ASTM D6866,
comprenant les étapes suivantes :

a) obtention d'un monoacide gras à partir d'une matière première renouvelable, éventuellement purification,
b) préparation d'un diacide à partir du monoacide gras issu de l'étape précédente,
c) polycondensation d'au moins un diacide gras, comportant du carbone d'origine renouvelable déterminé selon la norme ASTM D6866 sur une diamine cycloaliphatique.

2. Procédé selon la revendication 1, **caractérisé en ce que** le polyamide contient une teneur exprimée en pourcentage de carbone organique d'origine renouvelable, notée $\%C_{org.renouv}$ supérieure ou égale à 20%, avantageusement supérieure ou égale à 40%, de préférence supérieure ou égale à 50%, et plus préférentiellement supérieure ou égale à 52%.

3. Procédé selon l'une quelconque des revendications précédentes, **caractérisé en ce que** le polyamide est un homopolyamide.

4. Procédé selon l'une quelconque des revendications précédentes, **caractérisé en ce que** le monomère X est choisi parmi le 3,3'-diméthyl-4,4'-diamino-dicyclohexylméthane (BMACM ou MACM) et la p-bis(aminocyclohexyl)-methane

(PACM).

5. Procédé selon l'une quelconque des revendications précédentes, **caractérisé en ce que** le polyamide est de formule MACM.12 ; MACM.14, PACM.12 ; PACM.14.

6. Procédé selon l'une quelconque des revendications 1 à 5, **caractérisé en ce que** le polyamide est un copolyamide comprenant au moins deux motifs distincts répondant à la formulation générale suivante

X.Y/Z

dans laquelle :

X et Y étant tels que définis à l'une quelconque des revendications précédentes,
Z étant choisi parmi un motif obtenu à partir d'un aminoacide, un motif obtenu à partir d'un lactame et un motif répondant à la formule (diamine en Ca).(diacide en Cb), avec a représentant le nombre de carbones de la diamine et b représentant le nombre de carbones du diacide, a et b étant chacun compris entre 4 et 36.

7. Procédé selon la revendication 6, **caractérisé en ce que** le polyamide est un copolyamide choisi parmi les copolyamides de formule suivante: B.12/11, B.12/12, P.12/11, P.12/12, B.14/11, P.14/11, B.14/12, P.14/12, B.12/10.12, P.12/10.12, B.14/10.14, P.14/10.14, B.12/10.10, P.12/10.10, B.14/10.10 et P.14/10.10, B désignant le 3,3'-diméthyl-4,4'-diamino-dicyclohexylméthane et P désignant la p-bis(aminocyclohexyl)-methane.

## Patentansprüche

1. Verfahren zur Herstellung eines Polyamids, umfassend mindestens eine Wiederholungseinheit, die der folgenden allgemeinen Formulierung entspricht:

X.Y

wobei:

X ein cycloaliphatisches Diamin darstellt und
Y eine aliphatische Dicarbonsäure darstellt, ausgewählt aus Dodecandisäure (C12), Tetradecandisäure (C14) und Hexadecandisäure (C16),

**dadurch gekennzeichnet, dass** die Dicarbonsäure organischen Kohlenstoff erneuerbaren Ursprungs gemäß der Norm ASTM D6866 aufweist,
umfassend die folgenden Schritte:

a) Gewinnen einer Fettsäure aus einem erneuerbaren Rohstoff, gegebenenfalls Reinigung,
b) Herstellen einer Disäure aus der Fettsäure des vorherigen Schritts,
c) Polykondensieren mindestens einer Fettsäure, umfassend Kohlenstoff erneuerbaren Ursprungs gemäß der Norm ASTM D6866 an einem cycloaliphatischen Diamin.

2. Verfahren gemäß Anspruch 1, **dadurch gekennzeichnet, dass** das Polyamid einen Gehalt, ausgedrückt als Prozentsatz, an organischem Kohlenstoff erneuerbaren Ursprungs, bezeichnet als % $C_{org.renouv}$, enthält, der größer oder gleich 20 % ist, bevorzugt größer oder gleich 40 %, weiter bevorzugt größer oder gleich 50 % und am meisten bevorzugt größer oder gleich 52 %.

3. Verfahren gemäß einem der vorangehenden Ansprüche, **dadurch gekennzeichnet, dass** es sich bei dem Polyamid um ein Homopolyamid handelt.

4. Verfahren gemäß einem der vorangehenden Ansprüche, **dadurch gekennzeichnet, dass** das Monomer X ausgewählt ist aus 3,3'-Dimethyl-4,4'-diamino-dicyclohexylmethan (BMACM oder MACM) und P-bis(aminocyclohexyl)methan (PACM).

5. Verfahren gemäß einem der vorangehenden Ansprüche, **dadurch gekennzeichnet, dass** das Polyamid die Formel MACM.12; MACM.14, PACM.12; PACM.14 aufweist.

6. Verfahren gemäß einem der Ansprüche 1 bis 5, **dadurch gekennzeichnet, dass** das es sich bei dem Polyamid um ein Copolyamid handelt, das mindestens zwei verschiedene Einheiten umfasst, die der folgenden allgemeinen Formulierung entsprechen:

$$X.Y/Z$$

wobei:

X und Y wie in einem der vorangehenden Ansprüche definiert sind,
Z ausgewählt ist aus einer Einheit, die aus einer Aminosäure erhalten wurde, einer Einheit, die aus einem Lactam erhalten wurde und einer Einheit, die der Formel (Ca-Diamin).(Cb-Disäure) entspricht, wobei a die Anzahl der Kohlenstoffe des Diamins und b die Anzahl der Kohlenstoffe der Disäure darstellt, wobei a und b jeweils zwischen 4 und 36 liegen.

7. Verfahren gemäß Anspruch 6, **dadurch gekennzeichnet**, das es sich bei dem Polyamid um ein Copolyamid handelt, ausgewählt aus Copolyamiden der folgenden Formel: B.12/11, B.12/12, P.12/11, P.12/12, B.14/11, P.14/11, B.14/12, P.14/12, B.12/10.12, P.12/10.12, B.14/10.14, P.14/10.14, B.12/10.10, P.12/10.10, B.14/10.10 und P.14/10.10, wobei B 3,3'-Dimethyl-4,4'-diamino-dicyclohexylmethan und P P-bis(aminocyclohexyl)methan bezeichnet.

**Claims**

1. Process for the preparation of a polyamide comprising at least one repeat unit corresponding to the following general formulation:

$$X.Y$$

in which:

X represents a cycloaliphatic diamine and
Y represents an aliphatic dicarboxylic acid chosen from dodecanedioic ($C_{12}$) acid, tetradecanedioic ($C_{14}$) acid and hexadecanedioic ($C_{16}$) acid,

**characterized in that** the said dicarboxylic acid comprises organic carbon of renewable origin, determined according to Standard ASTM D6866,
comprising the following stages:

a) obtaining a fatty monoacid from a renewable starting material, optionally purifying,
b) preparing a diacid from the fatty monoacid resulting from the preceding stage,
c) polycondensing of at least one fatty diacid, comprising carbon of renewable origin determined according to standard ASTM D6866, with a cycloaliphatic diamine.

2. Process according to Claim 1, **characterized in that** the polyamide comprises a content, expressed as percentage, of organic carbon of renewable origin, denoted $\%C_{renew.org}$, of greater than or equal to 20%, advantageously of greater than or equal to 40%, preferably of greater than or equal to 50% and more preferably of greater than or equal to 52%.

3. Process according to either one of the preceding claims, **characterized in that** the polyamide is a homopolyamide.

4. Process according to any one of the preceding claims, **characterized in that** the monomer X is chosen from 3,3'-dimethyl-4,4'-diaminodicyclohexylmethane (BMACM or MACM) and p-bis(aminocyclohexyl)methane (PACM).

5. Process according to any one of the preceding claims, **characterized in that** the polyamide is of formula MACM.12,

MACM.14, PACM.12 or PACM.14.

**6.** Process according to any one of Claims 1 to 5, **characterized in that** the polyamide is a copolyamide comprising at least two distinct units corresponding to the following general formulation:

$$X.Y/Z$$

in which:

X and Y are as defined in any one of the preceding claims,
Z is chosen from a unit obtained from an amino acid, a unit obtained from a lactam and a unit corresponding to the formula (Ca diamine) . (Cb diacid), with a representing the number of carbon atoms of the diamine and b representing the number of carbon atoms of the diacid, a and b each being between 4 and 36.

**7.** Process according to Claim 6, **characterized in that** the polyamide is a lyamide chosen from the copolyamides of following formula: B.12/11, B.12/12, P.12/11, P.12/12, B.14/11, P.14/11, B.14/12, P.14/12, B.12/10.12, P.12/10.12, B.14/10.14, P.14/10.14, B.12/10.10, P.12/10.10, B.14/10.10 and P.14/10.10, B denoting 3,3'-dimethyl-4,4'-diaminodicyclohexylmethane and P denoting p-bis(aminocyclohexyl)methane.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1595907 A
- US 20050272908 A
- EP 0725101 A
- US 20070270544 A
- EP 2113535 A
- WO 9106660 A
- US 4474882 A
- EP 0471566 A


### Littérature non-brevet citée dans la description


- Cycloaliphatic Amines. Encyclopaedia of Chemical Technology, Kirk-Othmer. 1992, 386-405